# EUROPÄISCHE PATENTSCHRIFT

(11) **EP 2 893 199 B1**
(45) Veröffentlichungstag und Bekanntmachung des Hinweises auf die Patenterteilung: **21.09.2016**
(21) Anmeldenummer: 13756184.1
(22) Anmeldetag: 04.09.2013
(51) Int. Cl.: F16B 11/00

(54) **BÖRDELNAHT**
RAISED SEAM
JOINT À BORDS RELEVÉS

(30) Priorität: 05.09.2012 DE 102012215715; 01.10.2012 DE 102012217960
(43) Veröffentlichungstag der Anmeldung: 15.07.2015
(73) Patentinhaber: Ford Global Technologies, LLC, Dearborn, MI 48126 (US)
(72) Erfinder: FRIETSCH, Jörg, 53773 Hennef (DE); SASSMANNSHAUSEN, Jörg, 51375 Leverkusen (DE); DITTUS, Ernst, Stefan, 54578 Wiesbaum (DE); DITTRICH, Heinz, 54595 Orlenbach (DE)
(74) Vertreter: Dörfler, Thomas
(86) Internationale Anmeldenummer: PCT/EP2013/068273
(87) Internationale Veröffentlichungsnummer: WO 2014/037392

(56) Entgegenhaltungen:
- DE-A1-102008 060 930
- JP-A- S5 634 579
- US-A- 5 587 042

## Beschreibung

Die vorliegende Erfindung betrifft ein Verfahren zum Herstellen einer Bördelnaht zwischen einem inneren Bauteil, das einen freien Kantenabschnitt hat und einem äußeren Bauteil, das eine an einem Kantenabschnitt angeordnete Falzkante aufweist.

Die DE 10 2008 060 930 A1 befasst sich mit einer kombinierten Falz- und Klebverbindung an einem Karosserieteil eines Kraftfahrzeuges, wobei ein Außenteil des Karosserieteils in einem Randbereich um einen Randbereich eines Innenteils des Karosserieteils gefalzt ist, wobei ein Klebstoff den Randbereich des Innenteils beidseits umgibt. Die Herstellung der Falz- und Klebverbindung soll sich vereinfachen lassen, wenn er Klebstoff durch einen zumindest während der Herstellung der Falz- und Klebverbindung knetbaren Streifenkleber gebildet ist.

Bördelnähte, die auch als Falznähte bezeichnet werden können, werden zum Verbinden eines inneren Bleches mit einem äußeren Blech angewendet. Dabei sind die beiden Bauteile dazu ausgeführt, miteinander durch Umbiegen der Falzkante an dem äußeren Blech um den freien Kantenabschnitt des inneren Bauteils verbunden zu werden. Schwierig ist jedoch die Bördelnaht gegen Korrosionseinwirkung zu schützen, da sich in der Falznaht, also in dem Falzspalt dauerhaft verbleibende Feuchtigkeit sammeln kann, welche den Korrosionsprozess beschleunigend beeinflusst. Auch ist bekannt, dass die Bördelnaht bei einem lediglich kraftschlüssigen Metall an Metall Kontakt nicht die erforderlichen Festigkeitseigenschaften aufweist, wie diese zum Beispiel im Fahrzeugbau gefordert werden. Bördelnähte werden beispielsweise an Hauben, Türen oder ähnlichem eingesetzt. Bekannt ist, den Falzspalt daher mit geeigneten Mitteln zu versehen, um die Korrosionsbildung zu vermeiden, und um die Verbindung insgesamt widerstandfähiger ausführen zu können.

Hierzu werden z.B. Klebstoffe verwendet, wie beispielsweise die WO94/21740 offenbart. Dabei geht die WO94/21740 von einem Verfahren zum Erreichen einer Klebeverbindung in einer Falznaht zwischen einem inneren Teil und einem äußeren Teil mit einem Kaltepoxidkleber aus, der auf die Oberfläche des Kantenbereiches des äußeren Teils aufgebracht wird, welche mit dem Kantenbereich des inneren Teils in Kontakt ist. Die beiden Teile werden aufeinander gebracht, wobei die Falzkante umgebogen wird. Nach dem Vollenden der Falznaht, wird der Klebestreifen aufgebracht, und um die Verbindung herum gepresst, wobei allerdings nicht die komplette Bördelnaht mit dem Kleber bedeckt wird. So kann sich eine Luftblase in der Bördelnaht fangen, was mit der Lehre der WO94/21740 verhindert werden soll, indem ein Klebestreifen in einer heißen Phase vor dem Zusammenführen der beiden Bauteile und auch vor dem Falzen aufgebracht wird. Damit können wohl Luftblasen vermieden werden. Jedoch wird der heiße und flüssige Klebstoff bei dem Bördelvorgang aus der Falznaht herausgedrückt, so dass der Klebstoff Tropfen bilden kann, die, wenn diese abtropfen zu Verschmutzungen der Montagestrasse sowie der Werkzeuge nachfolgender Montagestationen führen können.

Um eine solche Verschmutzung zu vermeiden, sollte vorgesehen sein, dass der Klebstoff vor einer Weiterverarbeitung des Bauteils aushärtet. Dies wirkt sich jedoch nachteilig auf den Herstellungstakt auf, und ist zudem aufwendig und aus betriebswirtschaftlicher Sicht unrentabel.

Die EP 0 892 180 A1 schlägt vor, das innere Bauteil um seinen freien Kantenabschnitt herum mit einem vorgeformten Klebekörper zu umgeben. Der Klebekörper ist U-förmig so ausgeführt, dass dieser auf den freien Kantenabschnitt gesteckt mit Klemmkraft gehalten ist. Gegebenenfalls kann noch ein zweiseitig klebender Klebestreifen an dem längeren der beiden U-Schenkel angebracht werden, so dass zusätzlich zur Klemmkraft eine Klebkraft wirken kann. Ist der Klebekörper angebracht, werden die Bauteile zusammengebracht, wobei die Bördelnaht durch Umbiegen der Falzkante vollendet wird. Sodann wird der Klebekörper aufgeweicht, so dass die Bauteile an der Klebestelle benetzt werden. Anschließend wird die Klebestelle ausgehärtet.

Die DE 36 21 758 offenbart ein Verfahren zum Abdichten einer Falzverbindung mittels eines durch Wärmezufuhr gelier- und/oder härtbaren Bördelnahtklebers im Falzspalt und einer diesem vorgeschalteten Versiegelungsschicht, die aus durch Wärmezufuhr gelier- und/oder härtbarem Material besteht, und auf die Schnittkante der Falzverbindung aufgetragen wird, wobei die Falzverbindung mindestens einer Wärmebehandlung unterworfen wird. Zumindest die Bördelnaht wird auf Geliertemperatur erwärmt, wobei die Versiegelungsschicht auf die erwärmte Schnittkante aufgetragen wird.

Die Herstellung einer Bördelnaht mit einem pastösen Klebstoff ist demnach ein kritischer Prozess hinsichtlich des Korrosionsschutzes, aber auch hinsichtlich des ordnungsgemäßen Ausfüllens der Bördelnaht mittels des Klebstoffs. Zudem ist vorgesehen, dass der Klebstoff einer Voraushärtung unterzogen wird, wobei auch einzelne Schweißpunkte vorgesehen werden, um eine Relativbewegung beider zu verbindender Bauteile zueinander zu verhindern. Bisher kann eine Füllrate von 100/100/>0 nur durch ein Herausquetschen des Klebstoffes aus der Bördelnaht erreicht werden, was einen erheblichen Reinigungsaufwand nach sich zieht, wie oben bereits zur WO94/21740 angedeutet. Mit einer SPC (Statistical Process Control) ähnlichen Überprüfung kann die Verbindung überprüft werden, wobei allerdings noch keine zerstörungsfreien Überprüfungsmethoden zum Verifizieren, ob die Bördelnaht korrekt ausgefüllt ist, hinreichend anwendbar sind.

Die DE 195 04 482 A2 offenbart ein Verfahren und eine Einrichtung zum klebenden Verbinden unter Verwendung nicht komprimierbarer Teilchen, die mit einem Klebstoff gemischt werden. Die Klebstoffmischung wird auf eines der Teile aufgebracht, wobei das eine Teil über das andere in überlappender Lage gefalzt wird.

Die EP 0 030 918 A1 befasst sich mit einem Verfahren und einer Vorrichtung zur Applikation eines Klebstoffstreifens auf den Rand eines Blechformteils. Dabei wird ein der Forms des Rands eines Blechformteils angepasster Streifen der Klebefolie über einen entsprechend geformten gebildeten Schlitz gelegt, wobei das Blech mit seinem mit dem Streifen einzufassenden Rand in den Schlitz eingeführt, und dann Backen zusammengepresst werden, bis der Folienstreifen an dem Blech haftet.

Die DE 693 23 181 T2 befasst sich überwiegend mit einer Induktionsheizspule, welche ein wärme-härtbares, haftendes Verbindungsmaterial erwärmen soll, wobei auch eine Falzverbindung angesprochen ist. Während des Umbördelns wird das Verbindungsmaterial gequetscht.

Die DE 21 62 361 offenbart ein verfahren und Mittel zum Abdichten von Fugen und Verbindungen von Profilen aller Art, unter Verwendung eines plastischen Klebemittels. Das Dichtungsmittel wird auf einen flachen, bandförmigen Träger in pastenförmigem Zustand aufgetragen. In die Fuge eingelegt, härtet das Dichtungsmittel aus.

Die DE 101 16 719 A1 schlägt die Verwendung nachvernetzenden Schmelz-Klebstoffs vor, wobei der nachvernetzende Schmelz-Klebstoff nach dem Bördeln als Versiegelungsschicht vorgesehen ist. Auch die DE 32 38 651 A1 offenbart, dass eine Dichtraupe auf die freie Schnittkante einer Falzverbindung aufgetragen werden soll. Die Dichtraupe wird in zwei Stufen wärmebehandelt. Die DE 35 40 520 A1 dagegen lehrt, dass auf die Wärmebehandlung des die freie Schnittkante der Falzverbindung überdeckenden Materials verzichtet werden könne, in dem eine Material mit thermoplastischen Eigenschaften verwendet werden könnte.

Vor diesem Hintergrund liegt der Erfindung die Aufgabe zugrunde, ein Verfahren zum Herstellen einer Bördelnaht anzugeben, mit welchem sichergestellt werden kann, dass die Bördelnaht gegen Korrosion geschützt ist, wobei ungewollte Lufteinschlüsse ausgeschlossen werden können und wobei auf den Einsatz einer zusätzlichen Kantenversiegelung verzichtet werden kann.

Diese Aufgabe wird durch ein Verfahren mit den Merkmalen des Anspruchs 1 gelöst. Weitere, besonders vorteilhafte Ausgestaltungen der Erfindung offenbaren die Unteransprüche.

Es ist darauf hinzuweisen, dass die in der nachfolgenden Beschreibung einzeln aufgeführten Merkmale in beliebiger, technisch sinnvoller Weise miteinander kombiniert werden können und weitere Ausgestaltungen der Erfindung aufzeigen.

Die Beschreibung charakterisiert und spezifiziert die Erfindung insbesondere im Zusammenhang mit den Figuren zusätzlich.

Erfindungsgemäß umfasst ein Verfahren zum Herstellen einer Bördelnaht zwischen einem inneren Bauteil, das einen freien Kantenabschnitt hat und einem äußeren Bauteil, das eine an einem Kantenabschnitt angeordnete Falzkante aufweist zumindest die folgenden Schritte

Erzeugen eines Strukturklebstoffelementes mit einer an einen späteren Falzspalt angepassten Erstreckung, die kürzer ist als die Erstreckung des Falzspaltes, wobei das Strukturklebstoffelement einen expandierbaren Strukturklebstoff hat,

Aufbringen des Strukturklebstoffelementes im kalten Zustand auf eines der Bauteile an seiner zum anderen Bauteil orientierten Seite,
Umfalzen der Falzkante in Richtung zum inneren Bauteil, wobei
das Strukturklebstoffelement mit einem Überstand spätestens bei dem Umfalzen der Falzkante um die freie Kante des inneren Bauteils herum gebogen wird, und
Erwärmen zumindest des Bördelnahtbereiches so, dass der Strukturklebstoff schmilzt und in allen Richtungen expandierend auch aus dem Falzspalt austritt, und jeweils eine Dichtwulst ausbildet.

Mit der Erfindung wird eine gegen Korrosion geschützte Bördelnaht erreicht, welche noch dazu ohne zusätzlichen Einsatz eines speziellen Siegelstoffes an seinen relevanten Stellen versiegelt ist, indem die Dichtwulst ausgebildet wird.

In vorteilhafter Ausführung wird das Strukturklebstoffelement auf eines der Bauteile aufgeklebt, wobei ein Befestigungsabschnitt und der Überstand gebildet ist. Der Überstand wird dabei in bevorzugter Ausgestaltung so bemessen, dass dieser nach dem Umbiegen um die freie Kante des inneren Bauteils herum kürzer ist, als die Falzkante im umgebogenen Zustand. Insofern weist das Strukturklebstoffelement eine Erstreckung, also Breite auf, welcher kürzer ist, als die Erstreckung des Falzspaltes.

In bevorzugter Ausgestaltung wird das Strukturklebstoffelement auf das innere Bauteil so aufgebracht, dass der Befestigungsabschnitt an dem inneren Bauteil haftet. Der Überstand steht über die freie Kante des inneren Bauteils über. Möglich ist, dass das Strukturklebstoffelement eine Klebeseite hat, welche ein abziehbares Schutzelement aufweist. Die Klebeseite des Überstands ist in bevorzugter Ausführung von dem Schutzelement befreit. Dabei kann die Klebeseite einen Klebstoff aufweisen. Bevorzugt ist aber, das Strukturklebstoffelement auf dem inneren Bauteil anzubringen, wenn sich das Strukturklebstoffelement im kalten Zustand befindet, in welchem dieses eine geringe Klebrigkeit, also einen geringen Tack aufweist. Das Strukturklebstoffelement wird erwärmt, wodurch die Klebrigkeit zunimmt. So kann der Befestigungsabschnitt mit dem inneren Bauteil verklebt werden. Der Überstand wird bei der Erwärmung seine Klebrigkeit, also seinen Tack ebenfalls erhöhen.

Ist das Strukturklebstoffelement auf das innere Bauteil aufgebracht, also mit seinem Befestigungsabschnitt an dem inneren Bauteil angeklebt, werden das innere Bauteil und das äußere Bauteil zusammengeführt, bzw. zusammengefügt. Bei diesem Fügeprozess wird der Überstand bereits entsprechend mitgenommen, bzw. umgeformt, so dass der Überstand beispielsweise parallel zum Verlauf der Falzkante angeordnet ist. Da die Klebeseite keinen Kontakt zur Falzkante hat, gleitet das Strukturklebstoffelement entsprechend an der Falzkante ab und wird mitgenommen ohne zu haften. Das Strukturklebstoffelement liegt in diesem Zustand mit seiner zur Klebeseite gegenüberliegenden Strukturseite an dem äußeren Bauteil, also an der Falzkante an. Anschließend wird die Falzkante in Richtung zum inneren Bauteil umgefalzt, so dass die Bördelnaht, also die Falznaht gebildet ist. Bei dem Falzen der Falzkante wird der Überstand des Strukturklebstoffelementes entsprechend, also zwangsweise mitgenommen, wobei die Klebeseite an der freien Kante, aber auch an dem inneren Bauteil anliegt. Das innere Bauteil ist an seinem freien Kantenabschnitt also quasi von dem Strukturklebstoffelement bereichsweise umfasst.

Die Bördelnaht wird im kalten Zustand hergestellt, wobei das Strukturklebstoffelement im kalten Zustand kürzer ist als der Falzspalt. Dabei ist das Strukturklebstoffelement mit seiner inneren freien Kante innerhalb des Falzspaltes angeordnet und zu einem Übergang des freien Kantenabschnittes zum inneren Bauteil beabstandet. Die zur inneren freien Kante gegenüberliegende äußere freie Kante des Strukturklebstoffelementes ist ebenfalls innerhalb des Falzspaltes, jedoch zur freien Kante der Falzkante beabstandet. So ist jeweils ein Ausdehnungsraum für das Strukturklebstoffelement gegeben, wenn dieses aufgrund der Wärmeeinwirkung in dem Bördelnahtbereich erwärmt wird. Günstig ist dabei, dass der Strukturklebstoff bei Austritt aus dem Falzspalt die Dichtwulst bildet, und somit ein Abtropfen flüssigen oder pastösen Klebstoffes vermieden ist. Die Dichtwulst legt sich dabei zum einen um die freie Kante der Falzkante, und zum anderen den Übergang des freien Kantenabschnittes des inneren Bauteils überbrückend in dem Zwischenraum zwischen dem äußeren Bauteil und dem inneren Bauteil an. Vorteilhaft ist, dass das Strukturklebstoffelement dabei eine Mehrfachfunktion übernimmt. Zum einem wird eine Verbindung zwischen dem inneren und dem äußeren Bauteil, welche den entsprechenden Anforderungen hinsichtlich Korrosionsschutz und Festigkeit und dergleichen mechanischen Anforderungen standhält zur Verfügung gestellt, wobei zum anderen auf ein besonderes und zusätzliches Ummantelungs- bzw. Versiegelungsmaterial verzichtet werden kann, da die Dichtwulst gebildet ist. Bei dem Erwärmen expandiert das Strukturklebstoffelement, also der Strukturklebstoff aber nicht nur aus dem Falzspalt austretend, sondern auch so, dass der gesamte Falzspalt unter Vermeidung eines Einschlusses eines Mediums ausgefüllt ist, wobei beide Bauteile über die Adhäsion des Strukturklebstoffelementes mit einander verbunden sind.

In weiter günstiger Ausgestaltung des Verfahrens kann vorgesehen sein, den Überstand des Strukturklebstoffelementes vor dem Zusammenfügen der beiden Bauteile in einem ersten Zwischenschritt lediglich in Richtung zur freien Kante des freien Kantenabschnittes des inneren Bauteils zu formen, so dass die Klebeseite an der freien Kante haftet. Anschließend können die beiden Bauteile zusammengefügt werden, und die vorbeschriebenen Schritte werden durchgeführt.

Möglich ist aber auch, in einem zweiten Zwischenschritt den Überstand vollständig vor dem Zusammenfügen der beiden Bauteile um die freie Kante herum zu formen, so dass das Strukturklebstoffelement den freien Kantenabschnitt bereichsweise umfasst, und an diesem anhaftet. Anschließend können die beiden Bauteile zusammengefügt werden, wobei die Falzkante in Richtung zum inneren Bauteil gefalzt wird. Das Erwärmen schließt sich an.

In bevorzugter Ausgestaltung kann das Strukturklebstoffelement mittels eines bevorzugt stationären Applikationskopfes auf das zu beklebende Bauteil aufgebracht werden. Anschließend wird das Strukturklebstoffelement mittels Heißluftdüsen, Schaumstoffrollen oder Bürsten, um nur einige mögliche Beispiele zu nennen, um die Bauteilkante herumgelegt. Die Heißluft bewirkt eine Erweichung und ausreichende Haftung des Strukturklebstoffelementes auf der Metalloberfläche, auch wenn diese fettbehaftet, beölt oder anderweitig belegt ist. Mit anderen Worten wird das Strukturklebstoffelement leicht erwärmt, und an dem inneren Bauteil angedrückt. Denkbar ist aber auch, wenn das Strukturklebstoffelement ohne vorherige Erwärmung mit mechanischen Mitteln angedrückt wird, wobei das Strukturklebstoffelement an dem inneren Bauteil haftet.

Der bevorzugt stationäre Auftrags- bzw. Applikationskopf für das Strukturklebstoffelement erlaubt den Auftrag von Materialien mit variabler Breite und Dicke. Der Applikationskopf kann auch eine Schneidevorrichtung zum exakten Ablängen des zu verwendenden Strukturklebstoffelementes aufweisen.

Das erfindungsgemäße Verfahren kann für jedwede Form von gebördelten Flanschverbindungen angewendet werden und ist für verzinkten Stahl, unverzinkten Stahl, Aluminium und auch Magnesiumbauteile anwendbar, ohne, dass die genannten Materialien beschränkend sein sollen.

Die vollständige Aushärtung des Strukturklebstoffelementes kann beispielsweise in einem Elektrotauchlackofen erfolgen, wobei eine Aushärtung aber auch mittels beliebiger Aufheizmethodiken erfolgen kann.

In bevorzugter Ausführung kann das Strukturklebstoffelement mit seinem Befestigungsabschnitt an der zum äußeren Bauteil orientierten Seite des freien Kantenabschnittes des inneren Bauteils befestigt werden, wobei sodann der Überstand verformt, also um die freie Kante herum gebogen wird, was spätestens nach dem Zusammenfügen der beiden Bauteile zusammen mit dem Falzen der Falzkante durchgeführt wird. Möglich ist aber auch, zunächst den Überstand an dem freien Kantenabschnitt des inneren Bauteils an der zum äußeren Bauteil gegenüberliegenden Seite zu befestigen und sodann den Biegevorgang um die freie Kante herum auszuführen.

Denkbar ist aber auch, wenn das Strukturklebstoffelement mit seiner Klebseite auf die freie Kante des freien Kantenabschnittes des inneren Bauteils aufgelegt wird, wobei das Strukturklebstoffelement mit seinen überstehenden Schenkeln, also mit seinem Überstand und mit dem Befestigungsabschnitt in Richtung zum freien Kantenabschnitt verformt wird, so dass ebenfalls ein den freien Kantenabschnitt bereichsweise umgebendes Strukturelement an dem freien Kantenabschnitt haftet.

In weiter möglicher Ausführung kann vorgesehen sein, das Strukturklebstoffelement auf der zum inneren Bauteil orientierten Seite des äußeren Bauteils aufzulegen, wobei die Falzkante teilweise von dem Überstand belegt ist. Die beiden Bauteile können zusammengeführt, gefalzt und die Bördelnaht mit anschließendem Erwärmen hergestellt werden.

Das Strukturklebstoffelement kann, wie bereits erwähnt, lediglich eine klebende Seite aufweisen, welche z.B. mit dem Schutzelement versehen ist, die vor dem Anbringen entfernt wird. Das Schutzelement ist in bevorzugter Ausgestaltung als Schutzfolie also als Abziehfolie ausgeführt, welche leicht von der Klebeseite abziehbar ist. Besonders günstig ist, wenn das Strukturklebstoffelement als Schmelzdichtband ausgeführt ist, welches nach dem Erwärmen expandiert, und so den Falzspalt in allen Richtungen ausfüllend die geforderte Eigenschaft hat. Möglich ist auch, wenn das Strukturklebstoffelement als einseitig klebendes Schmelzdichtband ausgeführt ist.

Das Strukturklebstoffelement kann stückweise, also abschnittsweise bzw. als Streifen jeweils anpassbarer Länge auf das jeweilige Bauteil aufgebracht werden, was bedeutet, dass das jeweilige Strukturklebstoffelementstück auch nur einen Teilumfang des betreffenden Bauteils abdeckt, wobei mit einer Aneinanderreihung mehrerer Strukturklebstoffelementstücke bzw. -streifen der Gesamtumfang abdeckbar ist. Insofern kann das Strukturklebstoffelement als Rollenware erzeugt werden, wobei die passende, jeweils benötigte Länge abtrennbar ist, was natürlich automatisiert erfolgen kann. In weiter möglicher Ausgestaltung kann ein an den Umfang der Bauteile angepasstes Strukturklebstoffelement hergestellt werden, welches einstückig an dem betreffenden Bauteil aufbringbar ist. Insofern kann das Strukturklebstoffelement als Stückware angepasst an das betreffende Bauteil erzeugt werden. Das Strukturklebstoffelement kann eine Dicke von 0.3 bis 1 mm haben, was natürlich nicht beschränkend sein soll. Zielführend ist aber auf jeden Fall, dass die Breite des Strukturklebstoffelementes bevorzugt so bemessen ist, dass der Falzspalt im kalten Zustand nicht vollständig ausgefüllt ist.

In weiter günstiger Ausgestaltung kann vorgesehen sein, dass das Klebstoffelement im kalten Zustand auf die freie Kante, also auf eine Stirnkante des inneren Bauteils, gelegt werden kann, so dass der Überstand und der Befestigungsabschnitt gebildet ist, welche beide über die Stirnkante, z.B. wie zuvor beschrieben, überstehen.

Das Strukturklebstoffelement, welches auch als Klebstoffstreifen bezeichnet werden kann, wird erwärmt, und an einer Seite oder beiden Seiten des inneren Bauteils angeklebt. Das innere Bauteil wird an das äußere Bauteil angelegt, wobei die Falzkante, die auch als Falzflansch bezeichnet werden kann in Richtung zum inneren Bauteil umgefalzt wird. Anschließend wird zumindest der Bördelnahtbereich zum Aushärten des Klebstoffstreifens erhitzt.

Bei gattungsmäßigen Bördelnähten wird Klebstoff auf beiden Seiten des freien Kantenabschnittes des inneren Bauteils, wobei der freie Kantenabschnitt auch als Fügeflansch bezeichnet werden kann, benötigt. Dazu wird das Strukturklebstoffelement auf die Stirnkante des Fügeflansches aufgebracht, wobei das Strukturklebstoffelement sich im kalten Zustand befindet, d.h. es weist eine geringe Klebrigkeit bzw. geringen Tack auf, und es ist auch relativ steif. Ein solches Strukturklebstoffelement lässt sich jedoch nicht in beide Richtungen um die Stirnkante des Fügeflansches biegen. Durch die Erwärmung nach dem Auflegen wird das Strukturklebstoffelement klebrig und bleibt an der Stirnkante kleben. Gleichzeitig wird es weich und kann auf beiden Seiten des Fügeflansches angeklebt werden.

Beim Erwärmen sollte das Strukturklebstoffelement nur soweit erwärmt werden, dass es nicht aushärtet oder den Aushärtevorgang startet. Die Erwärmung soll nur soweit erfolgen, das Strukturklebstoffelement klebrig und weich zu machen, damit dieses an den in der Regel nicht gerade verlaufenden Fügeflansch angeklebt werden kann. Durch dieses Verfahren kann ein schwierig zu handhabendes Strukturklebstoffelement sicher auf einen gekrümmten Fügeflansch aufgebracht werden.

Vorteilhaft wird das Strukturklebstoffelement von oben auf die Stirnkante gesetzt. Dadurch kann das Strukturklebstoffelement rechts und links der Stirnkante beim Erwärmen unter Schwerkrafteinfluß nach unten umknicken.

Die Erwärmung des Strukturklebstoffelementes kann durch jede geeignete Wärmequelle erfolgen, z. B. Infrarot, Laserlicht. Bevorzugt wird Heißluft verwendet, durch eine oder mehrere Düsen.

Das Ankleben des erwärmten Strukturklebstoffelementes erfolgt bevorzugt mittels Luftstrahlen, die das Strukturklebstoffelement ein- oder beidseitig gegen den Fügeflansch drücken. Durch die erhöhte Klebrigkeit bzw. erhöhten Tack des erwärmten Strukturklebstoffelementes bleibt dieses leicht am Fügeflansch kleben.

Besonders bevorzugt dient Heißluft zum Erwärmen und Ankleben des Strukturklebstoffelementes. Damit kann das Erwärmen und Ankleben in einem Arbeitsgang erfolgen. Dazu geeignet sind Heißluftdüsen, die mittels eines Heißluftstrahls oder mehrerer Heißluftstrahlen das Strukturklebstoffelement gegen den Fügeflansch drücken. Das erwärmte Strukturklebstoffelement bleibt dort sofort kleben.

Vorteilhaft steht die Stirnkante des Fügeflansches beim Auflegen und/oder Ankleben des Strukturklebstoffelementes überwiegend waagerecht und/oder der Fügeflansch beim Auflegen und/oder Ankleben des Strukturklebstoffelementes in Querrichtung gesehen überwiegend senkrecht. Wenn das Strukturklebstoffelement von oben auf die Stirnkante gesetzt wird, kann es bereits unter Schwerkraft gleichförmig rechts und links der Stirnkante beim Erwärmen nach unten wegknicken und so gleichmäßig am Fügeflansch zum Ankleben kommen.

Wie bereits erwähnt ist zwischen Fügeflansch und Falzflansch ein Falzspalt gebildet, und das Strukturklebstoffelement weist zumindest abschnittsweise eine Erstreckung auf, die zumindest an einem Ende des Falzspaltes kürzer ist als die Erstreckung des Falzspaltes.

Möglich ist, so zum Beispiel einen Bördelnaht einer Fahrzeugtüre herzustellen, wobei das äußere und das innere Bauteil also Türbleche sein können. Selbstverständlich ist das erfindungsgemäße Verfahren nicht auf die Herstellung von Bördelnähten an Fahrzeugtüren beschränkt, sondern umschließt alle möglichen Bauteile, welche Bördelnähte aufweisen können.

Mit der Erfindung wird ein verbessertes Verfahren zum Herstellen einer Bördelnaht bereitgestellt, mit welchem ein Voraushärten vermeidbar ist, und trotzdem keine Verschmutzungen durch tropfenden Klebstoff zu erwarten sind. Zudem ist das Strukturklebstoffelement bezogen auf Klebebänder oder bezogen auf die Dicke von aufgetragenen, pastösen Pasten relativ dick, so dass bei dem Falzen der Falzkante bereits eine genügende mechanische Festigkeit zwischen beiden Bauteilen erreichbar ist, wodurch auf ein Voraushärten und sogar auf Schweißpunkte verzichtet werden kann, da eine Relativbewegung zwischen den zu verbindenden Bauteilen durch die Dicke des Strukturklebstoffelementes und daraus resultierender mechanischer Stabilität vermeidbar ist. Bei dem Falzvorgang wird zudem ein mechanisches Ausquetschen von Material aus dem Falzspalt heraus vermieden. Das Strukturklebstoffelement ist automatisch, beispielsweise mit einem Roboter applizierbar (Applikationskopf), wobei natürlich auch das Zusammenführen der beiden Beuteile aber auch der Falzprozess und das anschließende Erwärmen automatisierbar ist. Beispielsweise aufgrund der automatischen Aplikationsmöglichkeit ist eine sichere und kontrollierte Befestigung des Strukturklebstoffelementes möglich, was eine nachträgliche Überprüfung auf eine korrekte Bördelnaht, insbesondere unter zerstörenden Bedingungen hinfällig macht, da mit verifizierten Verfahrensparametern, stets dasselbe und den Anforderungen entsprechende Ergebnis erreichbar ist. Mit dem Verfahren kann auf den Einsatz von zusätzlichen Versiegelungsmaßnahmen, wie zum Beispiel das Auftragen eines kosmetischen Versiegelungselementes oder das Auftragen von Wasser abweisendem Wachs verzichtet werden.

Weitere vorteilhafte Einzelheiten und Wirkungen der Erfindung sind im Folgenden anhand von in den Figuren dargestellten Ausführungsbeispielen näher erläutert. Es zeigen:
- Fig. 1a bis 1 e: eine prinzipielle Schnittansicht mit einzelnen Schritten zum Herstellen einer Bördelnaht,
- Fig. 2: das Vorgehen aus Figur 1 mit einem ersten Zwischenschritt,
- Fig.3: das Vorgehen aus Figur 1 mit einem zu Figur 2 zweiten Zwischenschritt,
- Fig. 3a bis 3c: eine prinzipielle Schnittansicht mit einzelnen Schritten zum Herstellen einer Bördelnaht nach dem Vorgehen gemäß Figur 3,
- Fig. 4: eine weitere Ausführung zum Applizieren des Strukturklebstoffelementes,
- Fig. 5: ein Herumführen des Strukturklebstoffelementes nach dem Applizieren gemäß Figur 4,
- Fig. 6: eine weitere Ausführung zum Applizieren des Strukturklebstoffelementes,
- Fig.7: eine weitere Ausführung zum Applizieren des Strukturklebstoffelementes, und
- Fig. 8a bis 8c: eine beispielhafte Vorgehensweise zum Anbringen des Strukturklebstoffelementes an einem der Bauteile.

In den unterschiedlichen Figuren sind gleiche Teile stets mit denselben Bezugszeichen versehen, so dass diese in der Regel auch nur einmal beschreiben werden.

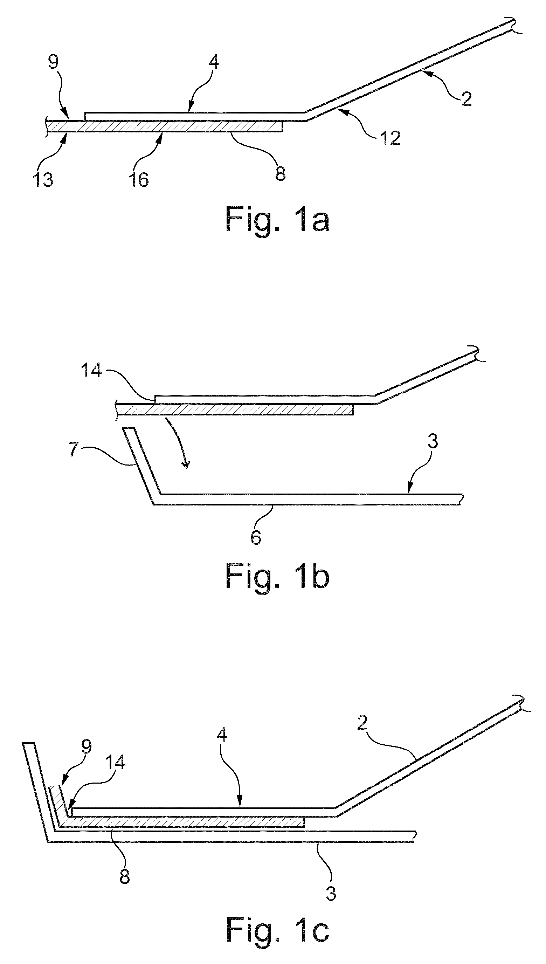

Die Figuren 1a bis 1e zeigen ein Verfahren zur Herstellen einer Bördelnaht 1 zwischen einem inneren Bauteil 2 und einem äußeren Bauteil 3. Das innere Bauteil 2 ist beispielsweise ein Türinnenblech eines Kraftfahrzeuges und weist einen freien Kantenabschnitt 4 auf, welcher beispielhaft in einem Winkel zu dem inneren Bauteil 2 angeordnet ist. Das äußere Bauteil 3 ist beispielsweise ein Türaußenblech des Kraftfahrzeuges, und weist eine an einem Kantenabschnitt 6 angeordnete Falzkante 7 auf.

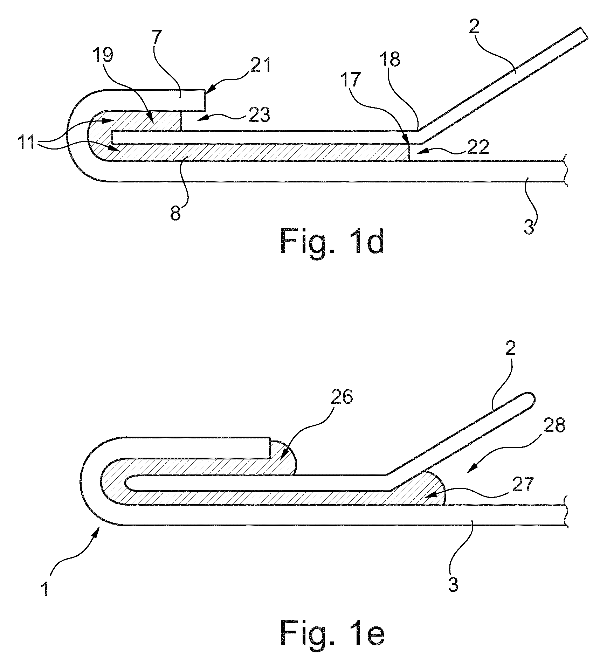

Zunächst wird ein Strukturklebstoffelement 8 erzeugt, welches eine Klebeseite 9 hat. Das Strukturklebstoffelement 8 wird mit einer solchen Erstreckung erzeugt, dass das Strukturklebstoffelement 8 kürzer ist als ein Falzspalt 11 (Figur 1d). Das Strukturklebstoffelement 8 weist also eine Breite auf, die kürzer, also schmaler ist als die Erstreckung des gesamten Falzspaltes 11.

Das Strukturklebstoffelement 8 kann an seiner Klebeseite 9 ein bereits entferntes Schutzelement, beispielsweise in der Ausgestaltung als Folie aufweisen. Das Strukturklebstoffelement 8 kann also zum Erhöhen des Tack zunächst erwärmt werden, so dass eine Befestigung möglich ist, da das Strukturklebstoffelement 8 klebrig wird. So kann von der Klebeseite 9 gesprochen werden. Ist das Strukturklebstoffelement 8 befestigt, wird dieses wiederum abkühlen, und seinen ursprünglichen geringen Tack erhalten, gleichwohl aber mit dem inneren Bauteil verklebt bleiben.

Das Strukturklebstoffelement 8 wird mit seiner Klebeseite 9 an der zum äußeren Bauteil 3 orientierten Seite 12 des inneren Bauteils 2 befestigt, wobei ein Überstand 13 gebildet ist. Mit dem Überstand 13 steht das Strukturklebstoffelement 8 über die freie Kante 14 des freien Kantenabschnittes 4 über. Mit seinem Befestigungsabschnitt 16, an dem sich der Überstand 13 anschließt, ist das Strukturklebstoffelement 8 an der zum äußeren Bauteil 3 orientierten Seite 12 angeklebt.

Die beiden Bauteile 2 und 3 werden sodann zusammengeführt (Figur 1b). Bei dem Zusammenführen der beiden Bauteile 2 und 3 wird der Überstand 13 mitgenommen, so dass der Überstand 13 parallel zur Falzkante 7 angeordnet ist. Die Klebeseite 9 ist bei dieser Ausführung noch zur freien Kante 14 des freien Kantenabschnittes 4 beabstandet (Figur 1 c).

Anschließend wird die Falzkante 7 in Richtung zum inneren Bauteil 2 gefalzt, wobei der Überstand 13 ebenfalls um die freie Kante 14 des freien Kantenabschnittes 4 mitgenommen wird, so dass die Klebeseite 9 an dem inneren Bauteil 2 zur Anlage kommt, also an diesem festgeklebt wird (Figur 1d).

Die bisherigen Schritte wurden ohne Wärmeeinfluss durchgeführt, was im Sinne der Erfindung bedeutet, dass die vorherige Erwärmung keine Expansion des Strukturklebstoffelementes bewirkt, wobei in Figur 1d erkennbar ist, dass das Strukturklebstoffelement 8 im kalten Zustand kürzer, also schmaler ist als der Falzspalt 11. Dabei ist das Strukturklebstoffelement 8 mit seiner inneren freien Kante 17 innerhalb des Falzspaltes 11 angeordnet und zu einem Übergang 18 des freien Kantenabschnittes 4 des inneren Bauteils 2, also zu dem Winkel zwischen beiden beabstandet. Die zur inneren Kante 17 gegenüberliegende äußere freie Kante 19 des Strukturklebstoffelementes 8 ist ebenfalls innerhalb des Falzspaltes 11, jedoch zur freien Kante 21 der Falzkante 7 beabstandet. So ist jeweils ein Ausdehnungsraum 22 und 23 gebildet.

Ist die Falzkante 7 gefalzt, also ist der Zustand nach Figur 1d erreicht, wird zumindest der Bördelnahtbereich einer Wärmebehandlung unterzogen, also erwärmt.

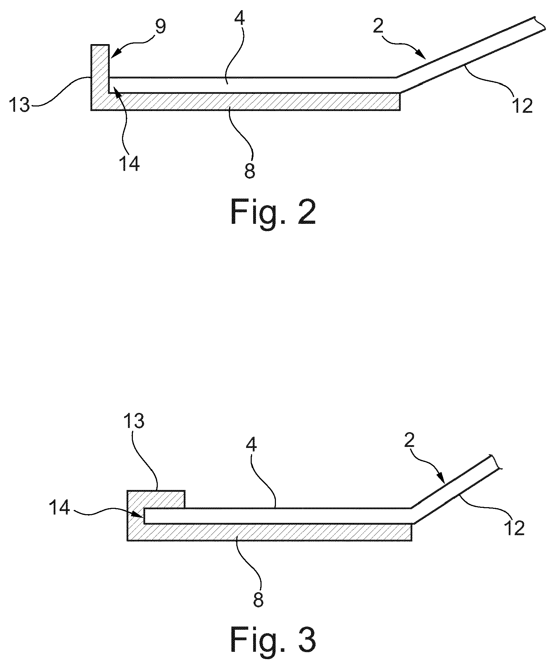

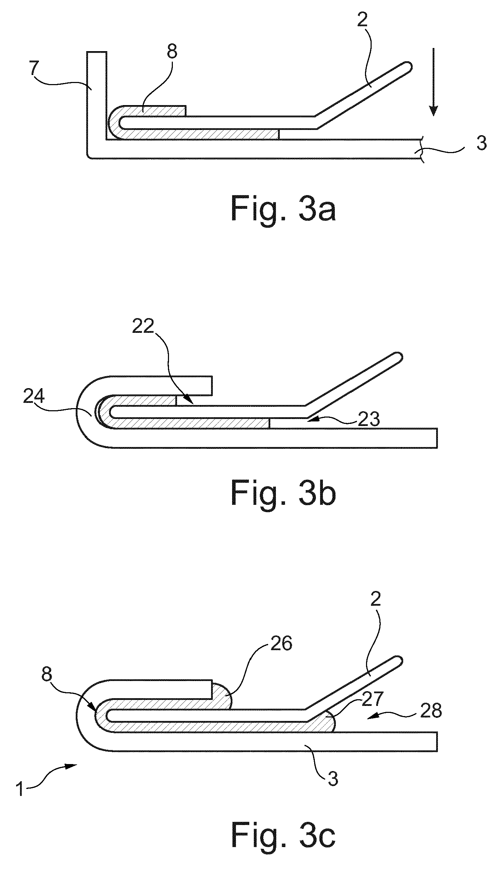

Dabei kann eine in einem Elektroofen durchzuführende Wärmebehandlung bei beispielsweise 175°C z.B. 10 Minuten lang ausreichend sein, so dass das Strukturklebstoffelement 8, also sein Strukturklebstoff in den jeweiligen Ausdehnungsraum 22 und 23, aus dem Falzspalt 11 heraus, aber auch in alle anderen Richtungen expandieren kann. In Figur 3b beispielsweise, ist ein Luftspalt 24 erkennbar, welcher nach der Wärmebehandlung (Figur 3c und Figur 1e) ausgefüllt ist. Die genannten Werte sind natürlich nur beispielhaft und keinesfalls Beschränkend genannt.

Den Zustand nach der Wärmebehandlung zeigen die Figuren 1e und 3c. Die Figuren zeigen, dass das Strukturklebstoffelement 8 unter anderem aus dem Falzspalt 11 herausgetreten ist und jeweils eine Dichtwulst 26,27 gebildet ist, die sich zum einen um die freie Kante 21 der Falzkante 7, und zum anderen den Übergang 18 des freien Kantenabschnittes 4 des inneren Bauteils 2 überbrückend in den Zwischenraum 28 zwischen dem inneren Bauteil 2 und dem äußeren Bauteil 3 beide abdichtend einlegt. Insofern ist nach der Erwärmung eine Füllrate von zumindest 100/100/>0 insbesondere auch kritischer Bereiche wie zum Beispiel von Ecken, Rundungen sowie auch von Designlinien erreichbar, da das Strukturklebstoffelement 8 den Falzspalt 11 zwar nicht vollständig ausfüllt, jedoch mit seinen freien Kanten 17 und 19 lediglich gering beabstandet zu den betreffenden Elementen 18 und 21 angeordnet ist. In den Figuren ist sogar eine Füllrate von 100/100/100 erkennbar.

Das Strukturklebstoffelement 8 kann beispielsweise ein Schmelzdichtband aus einem Acrylat-Epoxy-Hybridklebstoff sein.

In Figur 2 ist ein Zwischenschritt gezeigt, bei welchem das Strukturklebstoffelement 8 vor dem Zusammenführen mit seinem Überstand 13 bereits an der freien Kante 14 des freien Kantenabschnittes 4 angeklebt ist. Anschließend wird mit dem Vorgehen gemäß Figur 1 b bis 1 e vorgegangen werden.

In Figur 3 ist ein weiterer Zwischenschritt dargestellt, bei welchem das Strukturklebstoffelement mit seinem Überstand 13 bereits vollständig mit dem inneren Bauteil 2 verbunden ist. Die Figuren 3a bis 3c zeigen dabei das weitere Vorgehen, welches den Figuren 1 c bis 1 e entspricht.

Insofern liegt es im Sinne der Erfindung, dass das Strukturklebstoffelement 8 mit seinem Überstand 13 spätestens mit dem Falzen der Falzkante 7 um die freie Kante 14 des freien Kantenabschnittes 4 herum mitgenommen wird, was auch schon wie in den Figuren 2 und 3 gezeigt vor dem Falzen der Falzkante 7 durchgeführt werden kann.

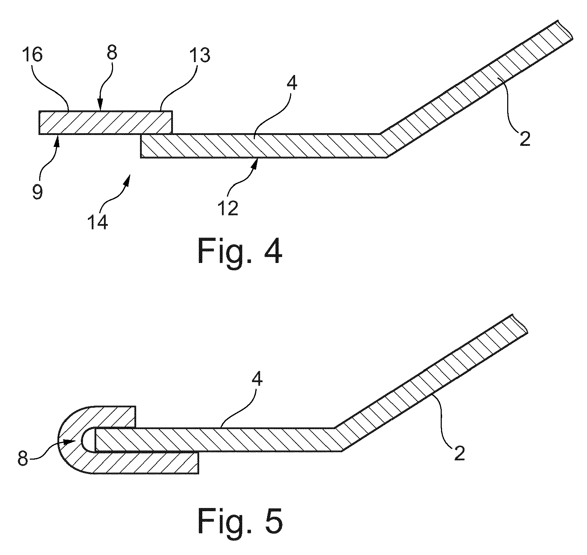

Bei dem in Figur 4 dargestellten Ausführungsbeispiel ist das Strukturklebstoffelement mit dem Überstand 13 an dem inneren Bauteil 2 befestigt, wobei der Befestigungsabschnitt 16 über die freie Kante 14 übersteht. Dieser wird, wie in Figur 5 erkennbar vor dem Zusammenführen der beiden Bauteile 2 und 3 um die freie Kante 14 herum geführt und mit dem inneren Bauteil 2 verklebt. Anschließend werden die Bauteile 2 und 3 zusammengeführt, und mit dem Vorgehen nach Figur 1 c bis 1 e bzw. 3a bis 3c fortgefahren.

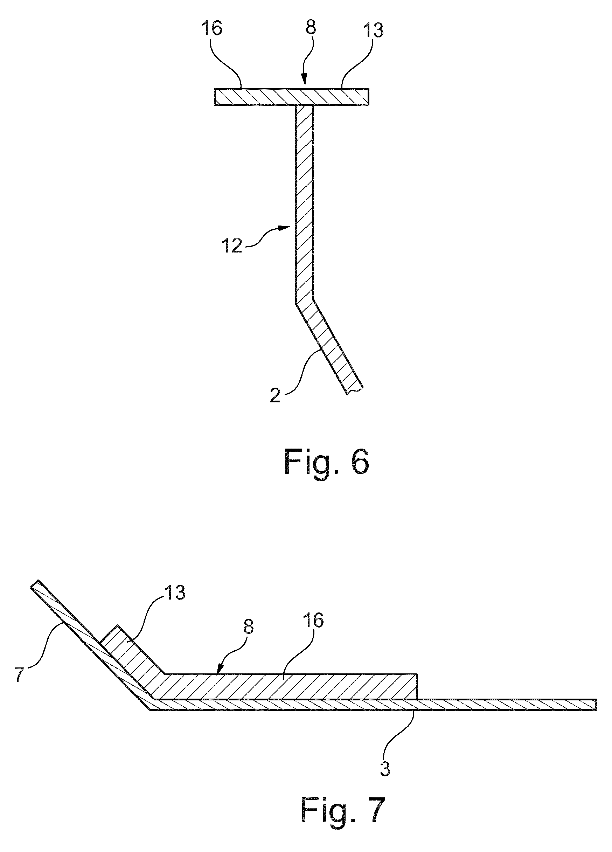

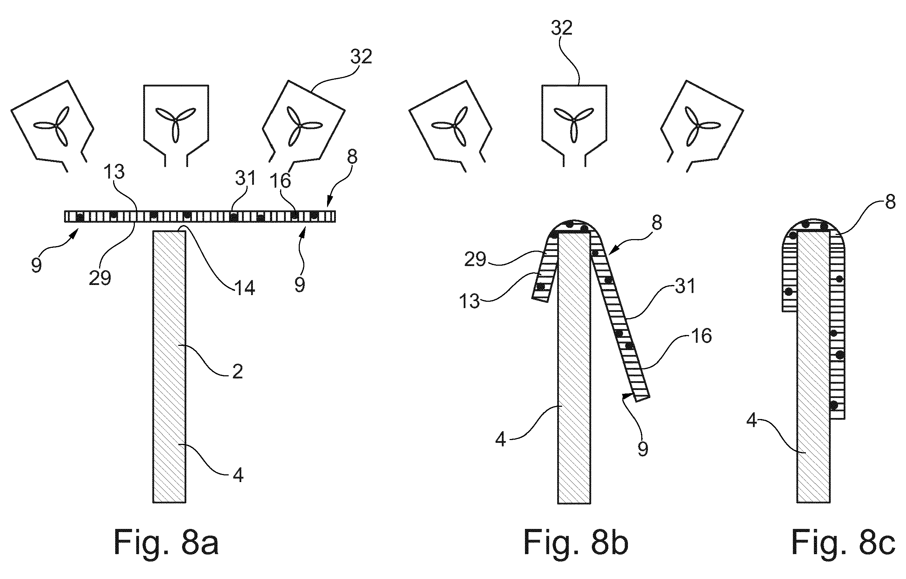

Bei dem in Figur 6 gezeigten Ausführungsbeispiel ist das Strukturklebstoffelement 8 mit seiner Klebeseite 9 an der freien Kante 14 befestigt. Der Überstand 13, aber auch der Befestigungsabschnitt 16 werden sodann in Richtung zum inneren Bauteil 2 geführt und an diesem klebend gehalten, wobei das Strukturklebstoffelement 8 wie in Figur 5 erkennbar gehalten ist. Das genaue Vorgehen ist zu den Figuren 8a bis 8c beschrieben. Anschließend werden die Bauteile 2 und 3 zusammengeführt, und mit dem Vorgehen nach Figur 1 c bis 1 e bzw. 3a bis 3c fortgefahren. Bei dem in Figur 7 erkennbaren Vorgehensbeispiel ist das Strukturklebstoffelement 8 auf das äußere Bauteil 3 aufgelegt, wobei die Klebeseite 9 in Richtung zum nicht dargestellten inneren Bauteil 2 weisen kann. Natürlich kann das Strukturklebstoffelement 8 mit seiner Klebseite 9 auch zu dem äußeren Bauteil 3 orientiert sein, so dass das Strukturklebstoffelement 8 mit diesem verklebt sein könnte. Anschließend werden die Bauteile 2 und 3 zusammengeführt, und mit dem Vorgehen nach Figur 1 c bis 1e bzw. 3a bis 3c fortgefahren.

In den Figuren 8a bis 8c ist entsprechend zu dem in Figur 6 dargestellten Ausführungsbeispiel eine mögliche Vorgehensweise dargestellt, wie das Strukturklebstoffelement 8 um die freie Kante 14, also um den freien Kantenabschnitt 4 des inneren Bauteils 2 gelegt wird. Das Strukturklebstoffelement 8 ist beispielhaft als Schmelzdichtband ausgeführt. Das Strukturklebstoffelement 8 kann als einseitig klebendes, oder auch als zweiseitig klebendes Schmelzdichtband ausgeführt sein.

Das Klebstoffelement 8 wird auf die freie Kante 14 des freien Kantenabschnittes 4 gelegt, wobei das Klebstoffelement 8 mit seinen überstehenden Schenkeln 29 und 31 in Richtung zum Fügeflansch 4 verformt wird, so dass das den freien Kantenabschnitt 4 bereichsweise umgebende Klebstoffelement 8 an dem freien Kantenabschnitt 4 haftet. Der überstehende Schenkel 29 entspricht dem Überstand 13 des Ausführungsbeispiels nach Figur 6, wobei der überstehende Schenkel 31 dem Befestigungsabschnitt 16 des Ausführungsbeispiels nach Figur 6 entspricht. Zum Umformen des Klebstoffelementes 8 in Richtung zum inneren Kantenabschnitt 4, der auch als Fügeflansch bezeichnet werden kann, können beispielhaft Heißluftdüsen 32 vorgesehen werden. Die Heißluft erwärmt das Klebstoffelement 8 mit einer solch geringen Temperatur, dass ein Umformen möglich ist, wobei eine Expansion aber ausgeschlossen ist. Ist das Klebstoffelement 8 um den freien Kantenabschnitt 4 gelegt (Figur 8c), wird das Klebstoffelement 8 abgekühlt, wobei ein Abkühlen auf Raumtemperatur ausreichend ist.

Alle Schritte können automatisiert, beispielsweise mittels eines Roboters durchgeführt werden. In bevorzugter Ausführung werden Streifen jeweils anpassbarer Länge des Strukturklebstoffelements 8 abgelängt, und an einem der beiden Bauteile 2 oder wie oben beschrieben aufgelegt. Zielführend dabei ist, dass das Strukturklebstoffelement 8 im kalten Zustand die jeweils an den zu erwarten Falzspalt 11 angepasste Breite aufweist, so dass jeweils der Ausdehnungsraum 22 und 23 gebildet ist, wobei das Strukturklebstoffelement eine Dicke von 0,3 bis 1 mm aufweisen kann.

## Patentansprüche

1. Verfahren zum Herstellen einer Bördelnaht (1) zwischen einem inneren Bauteil (2), das einen freien Kantenabschnitt (4) hat und einem äußeren Bauteil (3), das eine an einem Kantenabschnitt (6) angeordnete Falzkante (7) aufweist mit zumindest den folgenden Schritten
Erzeugen eines Strukturklebstoffelementes (8) mit einer an einen späteren Falzspalt (11) angepassten Erstreckung, die im kalten Zustand kürzer ist als die Erstreckung des Falzspaltes (11), wobei das Strukturklebstoffelement (8) einen expandierbaren Strukturklebstoff aufweist, und
Aufbringen des Strukturklebstoffelementes (8) im kalten Zustand auf eines der Bauteile (2,3) an seiner zum anderen Bauteil (2,3) orientierten Seite, Umfalzen der Falzkante (7) in Richtung zum inneren Bauteil (2), wobei das Strukturklebstoffelement (8) mit einem Überstand (13) spätestens bei dem Umfalzen der Falzkante (7) um die freie Kante (4) des inneren Bauteils (2) herum gebogen wird, und wobei das Strukturklebstoffelement (8) nach dem Umfalzen der Falzkante (7) in Richtung zum inneren Bauteil (2) mit seinen freien Kanten (17,18) innerhalb des Falzspaltes (11) angeordnet ist, so dass jeweils ein Ausdehnungsraum (22,23) gebildet ist,
Erwärmen zumindest des Bördelnahtbereiches, so dass der Strukturklebstoff schmilzt und in allen Richtungen expandierend auch aus dem Falzspalt (11) austritt, und eine Dichtwulst (26,27) ausbildet.

2. Verfahren nach Anspruch 1, **dadurch gekennzeichnet, dass** das Strukturklebstoffelement (8) mit seiner Klebeseite (9) am inneren Bauteil (2) angebracht wird.

3. Verfahren nach Anspruch 1 oder 2, **dadurch gekennzeichnet, dass** das Strukturklebstoffelement (8) im kalten Zustand auf die freie Kante (14) des inneren Bauteils (2) gelegt wird, wobei das Strukturklebstoffelement (8) den Überstand (13) und einen Befestigungsabschnitt (16) aufweist.

4. Verfahren nach einem der vorhergehenden Ansprüche,
**dadurch gekennzeichnet, dass**
das innere Bauteil (2) und das äußere Bauteil (3) zusammengeführt werden, wenn zumindest ein Befestigungsabschnitt (16) des Strukturklebstoffelementes (8) mit einem der beiden Bauteile verbunden ist, wobei der Überstand (13) in Fügerichtung mitgenommen wird, wobei sich die Dichtwulst (26) um die freie Kante (14) der Falzkante (7) legt.

5. Verfahren nach einem der vorhergehenden Ansprüche,
**dadurch gekennzeichnet, dass**
sich die Dichtwulst (27) einen Übergang (18) des freien Kantenabschnittes (4) des inneren Bauteils (2) überbrückend in den Zwischenraum (28) zwischen dem inneren Bauteil (2) und dem äußeren Bauteil (3) einlegt.

6. Verfahren nach einem der vorhergehenden Ansprüche,
**dadurch gekennzeichnet, dass**
der Überstand (13) des Strukturklebstoffelementes (8) in einem ersten Zwischenschritt vor dem Zusammenführen der beiden Bauteile (2,3) an der freien Kante (14) des freien Kantenabschnitts (4) angeklebt wird, und mit dem Falzen der Falzkante (7) in Richtung zum inneren Bauteil (2) mitgenommen wird und anhaftet.

7. Verfahren nach einem der vorhergehenden Ansprüche,
**dadurch gekennzeichnet, dass**
der Überstand (13) des Strukturklebstoffelementes (8) in einem zweiten Zwischenschritt vor dem Zusammenführen der beiden Bauteile (2,3) um die freie Kante (14) herumgeführt und vollständig mit dem inneren Bauteil (2) verklebt wird.

8. Verfahren nach einem der vorhergehenden Ansprüche,
**dadurch gekennzeichnet, dass**
das Strukturklebstoffelement (8) mit seinem Überstand (13) an dem freien Kantenabschnitt (4) des inneren Bauteils (2) angelegt wird, und der Befestigungsabschnitt (16) um die freie Kante (14) herumgeführt und an dem inneren Bauteil (2) befestigt wird.

9. Verfahren nach einem der vorhergehenden Ansprüche,
**dadurch gekennzeichnet dass**
das Strukturklebstoffelement (8) stückweise als Streifen oder einstückig aufgebracht wird.

10. Verfahren nach einem der vorhergehenden Ansprüche,
**dadurch gekennzeichnet, dass**
das Strukturklebstoffelement (8) erwärmt wird, der Überstand (13) und ein Befestigungsabschnitt (16) jeweils um die freie Kante (14) herumgeführt werden und an dem inneren Bauteil (2) befestigt wird.

11. Verfahren nach einem der vorhergehenden Ansprüche,
**dadurch gekennzeichnet, dass**
das Strukturklebstoffelement (8) zum Erwärmen mit Heißluft angeblasen wird.

12. Verfahren nach einem der vorhergehenden Ansprüche,
**dadurch gekennzeichnet, dass**
das Strukturklebstoffelement (8) zum Ankleben mit einem oder mehreren Luftstrahl bzw. Luftstrahlen beaufschlagt wird.

13. Verfahren nach einem der vorhergehenden Ansprüche,
**dadurch gekennzeichnet, dass**
das Strukturklebstoffelement (8) zum Erwärmen und Ankleben mit Heißluft angeblasen wird.

14. Verfahren nach einem der vorhergehenden Ansprüche,
**dadurch gekennzeichnet, dass**
das Ankleben des Strukturklebstoffelementes (8) unter Schwerkraft erfolgt.

15. Verfahren nach einem der vorhergehenden Ansprüche,
**dadurch gekennzeichnet, dass**
das Strukturklebstoffelement (8) angedrückt wird, bevorzugt nachdem das Strukturklebstoffelement (8) zum Befestigen erwärmt wurde.

## Claims

1. Method for producing a double-flanged seam (1) between an inner component (2) having a free edge section (4) and an outer component (3) having a fold edge (7) arranged on an edge section (6), comprising at least the following steps:
producing an adhesive structural element (8) with an extension adjusted to a fold gap (11) to be added later on, the extension in the cold condition being shorter than the extension of the fold gap (11), wherein the adhesive structural element (8) has an expandable structural adhesive, and
applying the adhesive structural element (8) in the cold condition onto one of the components (2, 3) on its side facing the other component (2, 3), crimping over the fold edge (7) toward the inner component (2), wherein the adhesive structural element (8) is bent over with an excess length (13) around the free edge (4) of the inner component (2) at the latest when crimping over the fold edge (7), and wherein, following crimping over of the fold edge (7) toward the inner component (2), the adhesive structural element (8) is arranged with the free edges (17, 18) thereof within the fold gap (11) such that in each case an expansion space (22, 23) is formed,
heating up at least the area of the double-flanged seam, thus melting the structural adhesive causing it also to leak from the fold gap (11) in a manner expanding in all directions and forming a sealing bead (26, 27).

2. Method according to Claim 1, **characterized in that** the adhesive structural element (8) is applied with its adhesive side (9) to the inner component (2).

3. Method according to Claim 1 or 2, **characterized in that**
the adhesive structural element (8) is placed in the cold condition onto the free edge (14) of the inner component (2), the adhesive structural element (8) having the excess length (13) and a fastening portion (16).

4. Method according to one of the preceding claims, **characterized in that**
the inner component (2) and the outer component (3) are joined when at least one fastening portion (16) of the adhesive structural element (8) is connected to one of the two components, wherein the excess length (13) is moved along in the joining direction, wherein the sealing bead (26) settles around the free edge (14) of the fold edge (7).

5. Method according to one of the preceding claims, **characterized in that**
the sealing bead (27) settles in the intermediate space (28) between the inner component (2) and the outer component (3), bridging a transition (18) of the free edge section (4) of the inner component (2).

6. Method according to one of the preceding claims, **characterized in that**,
in a first intermediate step before the two components (2, 3) are joined, the excess length (13) of the adhesive structural element (8) is adhesively bonded to the free edge (14) of the free edge section (4), and, with the folding of the fold edge (7), is moved along in the direction of the inner component (2) and adheres.

7. Method according to one of the preceding claims, **characterized in that**, in a second intermediate step before the two components (2, 3) are joined, the excess length (13) of the adhesive structural element (8) is guided around the free edge (14) and is completely adhesively bonded to the inner component (2).

8. Method according to one of the preceding claims, **characterized in that**
the adhesive structural element (8) is placed with its excess length (13) on the free edge section (4) of the inner component (2), and the fastening portion (16) is guided around the free edge (14) and is fastened to the inner component (2).

9. Method according to one of the preceding claims, **characterized in that**
the adhesive structural element (8) is applied piece by piece as a strip or in one piece.

10. Method according to one of the preceding claims, **characterized in that**
the adhesive structural element (8) is heated, the excess length (13) and a fastening portion (16) are each guided around the free edge (14) and fastened to the inner component (2).

11. Method according to one of the preceding claims, **characterized in that**
the adhesive structural element (8) is blasted with hot air for heating purposes.

12. Method according to one of the preceding claims, **characterized in that**
the adhesive structural element (8) is subjected to an air jet or to a plurality of air jets for gluing purposes.

13. Method according to one of the preceding claims, **characterized in that**
the adhesive structural element (8) is blasted with hot air for heating and gluing purposes.

14. Method according to one of the preceding claims, **characterized in that**
the adhesive structural element (8) is glued under the effect of gravitational force.

15. Method according to one of the preceding claims, **characterized in that**
the adhesive structural element (8) is pressed on, preferably after the adhesive structural element (8) has been heated for fastening purposes.

## Revendications

1. Procédé de fabrication d'un joint à bords sertis (1) entre un composant interne (2) qui présente une portion d'arête libre (4) et un composant externe (3) qui présente une arête de pliage (7) disposée au niveau d'une portion d'arête (6), comprenant au moins l'une des étapes suivantes :
production d'un élément adhésif structurel (8) dont l'étendue est adaptée à une fente de pliage ultérieure (11) et est plus courte, à l'état froid, que l'étendue de la fente de pliage (11), l'élément adhésif structurel (8) présentant un adhésif structurel expansible, et
application de l'élément adhésif structurel (8) à l'état froid sur l'un des composants (2, 3) au niveau de son côté orienté vers l'autre composant (2, 3),
pliage de l'arête de pliage (7) dans la direction du composant interne (2), l'élément adhésif structurel (8) étant recourbé avec un dépassement (13) au plus tard lors du repliement de l'arête de pliage (7) autour de l'arête libre (4) du composant interne (2), et l'élément adhésif structurel (8), après le repliement de l'arête de pliage (7) dans la direction du composant interne (2), étant disposé avec ses arêtes libres (17, 18) à l'intérieur de la fente de pliage (11), de telle sorte qu'un espace de dilatation (22, 23) soit à chaque fois formé,
chauffage d'au moins la région du joint à bords sertis, de telle sorte que l'adhésif structurel fonde et sorte également hors de la fente de pliage (11) en s'élargissant dans toutes les directions, et constitue un bourrelet d'étanchéité (26, 27).

2. Procédé selon la revendication 1, **caractérisé en ce que** l'élément adhésif structurel (8) est monté avec son côté adhésif (9) contre le composant interne (2).

3. Procédé selon la revendication 1 ou 2, **caractérisé en ce que** l'élément adhésif structurel (8) est posé à l'état froid sur l'arête libre (14) du composant interne (2), l'élément adhésif structurel (8) présentant le dépassement (13) et une portion de fixation (16).

4. Procédé selon l'une quelconque des revendications précédentes, **caractérisé en ce que**
le composant interne (2) et le composant externe (3) sont assemblés lorsqu'au moins une portion de fixation (16) de l'élément adhésif structurel (8) est connectée à l'un des deux composants, le dépassement (13) étant entraîné dans la direction du joint, le bourrelet d'étanchéité (26) se plaçant autour de l'arête libre (14) de l'arête de pliage (7).

5. Procédé selon l'une quelconque des revendications précédentes,
**caractérisé en ce que**
le bourrelet d'étanchéité (27) s'insère dans l'espace intermédiaire (28) entre le composant interne (2) et le composant externe (3) en surmontant un dépassement (18) de la portion d'arête libre (4) du composant interne (2).

6. Procédé selon l'une quelconque des revendications précédentes, **caractérisé en ce que**
le dépassement (13) de l'élément adhésif structurel (8), dans une première étape intermédiaire avant l'assemblage des deux composants (2, 3), est collé à l'arête libre (14) de la portion d'arête libre (4), et, avec le pliage de l'arête de pliage (7) dans la direction du composant interne (2), est entraîné et adhère.

7. Procédé selon l'une quelconque des revendications précédentes, **caractérisé en ce que**
le dépassement (13) de l'élément adhésif structurel (8), dans une deuxième étape intermédiaire avant l'assemblage des deux composants (2, 3), est guidé autour de l'arête libre (14) et est collé complètement avec le composant interne (2).

8. Procédé selon l'une quelconque des revendications précédentes, **caractérisé en ce que** l'élément adhésif structurel (8) est appliqué avec son dépassement (13) contre la portion d'arête libre (4) du composant interne (2) et la portion de fixation (16) est guidée autour de l'arête libre (14) et est fixée au composant interne (2).

9. Procédé selon l'une quelconque des revendications précédentes,
**caractérisé en ce que**
l'élément adhésif structurel (8) est appliqué par portion sous forme de ruban ou d'une seule pièce.

10. Procédé selon l'une quelconque des revendications précédentes,
**caractérisé en ce que**
l'élément adhésif structurel (8) est chauffé, le dépassement (13) et une portion de fixation (16) sont guidés à chaque fois autour de l'arête libre (14) et sont fixés au composant interne (2).

11. Procédé selon l'une quelconque des revendications précédentes,
**caractérisé en ce que**
l'élément adhésif structurel (8) est soufflé avec de l'air chaud pour son chauffage.

12. Procédé selon l'une quelconque des revendications précédentes,
**caractérisé en ce que**
l'élément adhésif structurel (8), pour son collage, est sollicité avec un ou plusieurs jets d'air.

13. Procédé selon l'une quelconque des revendications précédentes,
**caractérisé en ce que**
l'élément adhésif structurel (8) est soufflé avec de l'air chaud pour son chauffage et son collage.

14. Procédé selon l'une quelconque des revendications précédentes,
**caractérisé en ce que**
le collage de l'élément adhésif structurel (8) s'effectue sous l'effet de la force de pesanteur.

15. Procédé selon l'une quelconque des revendications précédentes, **caractérisé en ce que** l'élément adhésif structurel (8) est pressé de préférence après que l'élément adhésif structurel (8) a été chauffé pour sa fixation.
